# EUROPÄISCHE PATENTSCHRIFT

(11) **EP 1 614 566 B1**
(45) Veröffentlichungstag und Bekanntmachung des Hinweises auf die Patenterteilung: **09.11.2011**
(21) Anmeldenummer: 05013552.4
(22) Anmeldetag: 23.06.2005
(51) Int. Cl.: B60J 7/20

(54) **Kraftfahrzeug mit einer Heckklappe**
Vehicle with a trunk lid
Véhicule avec un hayon arrière

(30) Priorität: 05.07.2004 DE 102004032625
(43) Veröffentlichungstag der Anmeldung: 11.01.2006
(73) Patentinhaber: Wilhelm Karmann GmbH, 49084 Osnabrück (DE)
(72) Erfinder: Bunsmann, Winfried, 49143 Bissendorf (DE); Brockhoff, Ulrich, 49565 Bramsche (DE)
(74) Vertreter: Kronthaler, Schmidt & Coll.

(56) Entgegenhaltungen:
- EP-A- 1 364 823
- WO-A-03/080377
- DE-A1- 10 051 616

## Beschreibung

Die Erfindung betrifft ein Kraftfahrzeug mit einem zumindest im wesentlichen unterhalb einer Heckklappe ablegbaren Dachbereich nach dem Oberbegriff des Anspruchs 1. Ein solches Fahrzeug ist aus der WO 03/080377 A bekannt.

Aus der DE 197 56 062 C1 ist zudem ein Cabriolet-Fahrzeug bekannt, bei dem neben der ersten, heckseitigen Schwenkachse (dort mit dem Bezugszeichen 13 versehen) seitlich zwei separate Hilfsrahmen vorgesehen sind. Diese sind gegenüber der Fahrzeugkarosserie schwenkbar (um die Achse 6) angeordnet. An ihrem der jeweiligen Schwenkachse abgewandten Ende stützen sie einen nach Art einer Kurbel beweglichen Anlenkhebel (dort mit dem Bezugszeichen 4 benannt) ab, der an seinem dem jeweiligen Hilfsrahmen abgewandten Ende ein Mehrgelenk für eine gegensinnige Öffnung zur Freigabe einer Durchtrittsöffnung für das Dach abstützt. Durch diese Konstruktion sind eine Vielzahl von Schwenkgelenken und Bauteilen erforderlich, so daß der Herstellungsaufwand erhöht ist. Zudem ist durch die seitlichen Hilfsrahmen die zur Verfügung stehende Breite des Kofferraums erheblich eingeschränkt, und beim Öffnen der Beladeöffnung für Gepäck tritt durch die langen, vielgelenkigen und relativ dünnen Hilfsrahmen die Gefahr von Verwindungen der bewegten Heckklappe auf.

Der Erfindung liegt das Problem zugrunde, den Aufbau der Heckklappenabstützung zu verbessern.

Die Erfindung löst dieses Problem durch ein Cabriolet-Fahrzeug mit den Merkmalen des Anspruchs 1. Vorteilhafte Ausgestaltungen des Gegenstandes der Erfindung ergeben sich aus den weiteren Ansprüchen 2 bis 9.

Das erfindungsgemäße Kraftfahrzeug ermöglicht eine erhebliche Steigerung der Stabilität während der Öffnung der Heckklappe zur Freigabe der Beladeöffnung für Gepäck. Dabei ist die Heckklappe mit ihrem vorderen und/oder oberen Ende an dem fest an der Karosserie verbundenen Querträger dann ebenso sicher gehalten, wie dies bei einer nur in diesem Öffnungssinn bewegbaren Heckklappe der Fall wäre. Jegliche Einschränkung der Kofferraumbreite ist vermieden, da seitliche Hilfsrahmen vollständig entbehrlich sind. Der Querträger erstreckt sich vorzugsweise über die gesamte Breite der Heckklappe, so daß er die Karosserie zusätzlich aussteift und auch die Unfallsicherheit erhöht, insbesondere bei einem Seitenaufprall.

Wenn die Heckklappe ein Rückfenster umfaßt und der Querträger oberhalb des Rückfensters gelegen ist, kann trotz eines großen öffnenden Dachbereichs eine sehr große Beladeöffnung für Gepäck mit einer beispielsweise in sich ungeteilten Heckklappe bereitgestellt werden. Auch Kombi- oder Geländefahrzeuge können daher erfindungsgemäß ausgebildet sein.

Der Querträger bei Freigabe der Beladeöffnung für Gepäck mit festen C-Säulen der Karosserie verriegelbar sein, was ein Heckabteil wie bei einem geschlossenen Kombi-, Schrägheckfahrzeug oder ähnlichem ermöglicht und dennoch vorteilhaft ein Cabrio-ähnliches Freiluftgefühl schafft, wenn das Dach außerhalb der festen C-Säulen einen vollständig öffnungsfähigen Dachbereich ausbildet.

Eine mechanisch einfache Ausbildung des Querträgers ist dadurch erreichbar, wenn dieser bei Freigabe der Beladeöffnung für Gepäck gegenüber der Heckklappe und bei Freigabe der Durchtrittsöffnung für den Dachbereich gegenüber der Karosserie unbewegt ist. Dann sind jeweils nur einfache Verriegelungselemente für die eine oder andere Bewegung zu öffnen oder zu schließen.

Der benötigte Bauraum kann dadurch vermindert werden, daß der Querträger einen zu den Seiten offenen Wasserkanal umfaßt, der in an der Karosserie verriegelter Stellung in Ablaufkanäle der C-Säulen überleitet. Die Gelenke für die Halterung der Heckklappe an dem Querträger können dann in der Vertiefung des Wasserkanals von außen unsichtbar gehalten sein. Zudem kann der Querträger als durchgehendes Profil ausgebildet sein, was die Herstellung vereinfacht.

Sofern der öffnungsfähige Dachbereich im geschlossenen Zustand den Querträger bereichsweise übergreift und zur Öffnung der Heckklappe zur Freigabe der Durchtrittsöffnung für das Dach in seinem bezüglich der Fahrtrichtung hinteren Bereich anhebbar ist, kann der im Querträger gebildete Wasserkanal sowohl für die Heckklappe als auch für den davor liegenden Dachbereich genutzt werden, ohne daß dieser eine eigene Wasserabführung benötigen würde.

In jedem Fall kann in der erfindungsgemäßen Ausgestaltung die Anzahl der Bauteile sehr gering gehalten sein.

Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:

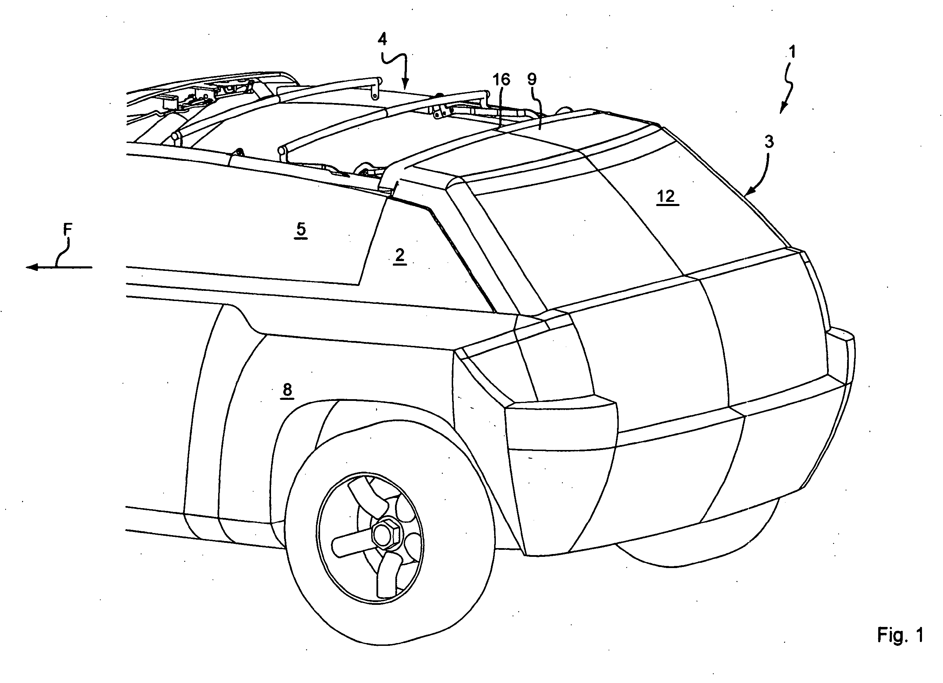

- Fig. 1: eine perspektivische Ansicht eines erfindungsgemäßen Cabriolet-Fahrzeugs von schräg hinten bei geschlossenem Dachbereich und geschlossener Heckklappe,
- Fig. 2: eine seitliche Schnittansicht des oberen Heckklappenendes in Stellung nach Fig. 1, wobei die Verbindung zwischen C-Säulen und schwenkbaren Teilen der Heckklappe entriegelt ist,
- Fig. 3: eine ähnliche Ansicht wie Fig. 2, wobei jedoch die Verbindung zwischen C-Säulen und schwenkbaren Teilen der Heckklappe zur Öffnung der Heckklappe im Freigabesinn der Beladeöffnung für Gepäck verriegelt ist,
- Fig. 4: eine ähnliche Ansicht wie Fig. 1, jedoch bei im Freigabesinn der Beladeöffnung für Gepäck aufgeschwenkter Heckklappe,
- Fig. 5: einen ähnlichen Ausschnitt wie Fig. 3 bei nach Fig. 4 geöffneter Heckklappe,
- Fig. 6: eine ähnliche Ansicht wie Fig. 1, jedoch bei im Freigabesinn der Durchtrittsöffnung für den Dachbereich geöffneter Heckklappe,
- Fig. 7: einen ähnlichen Ausschnitt wie in Fig. 3 bei noch geschlossener Heckklappe, jedoch leicht angehobenem Ende des zu öffnenden Dachbereichs,
- Fig. 8: eine ähnliche Ansicht wie Fig. 7 bei beginnender Öffnung der Heckklappe mit dem Querträger zur Freigabe der Durchtrittsöffnung für den Dachbereich,

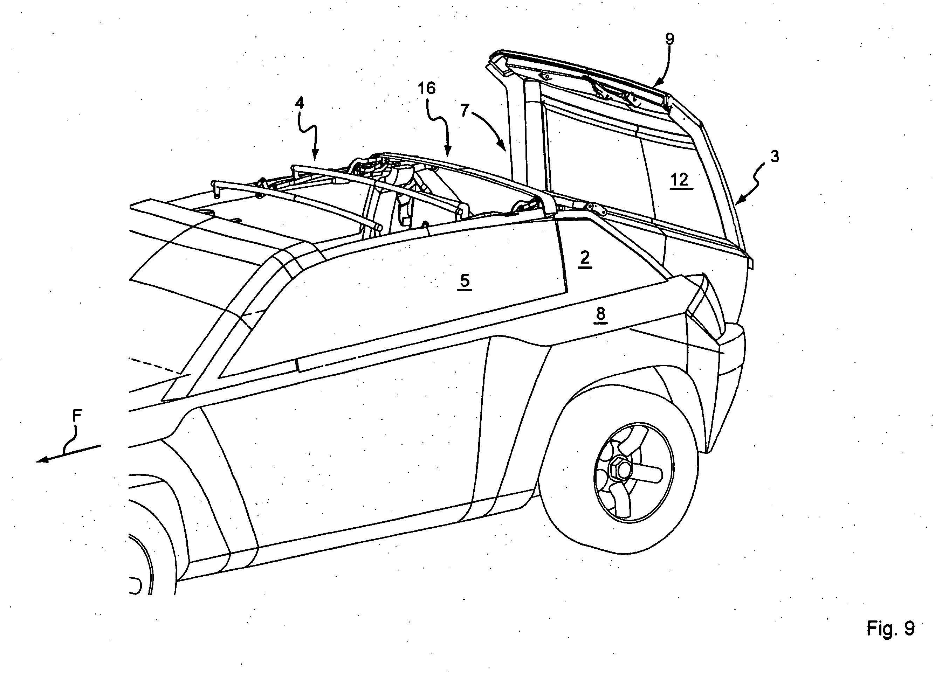

- Fig. 9: das Fahrzeug in Ansicht von schräg vorne bei nach Fig. 6 geöffneter Heckklappe,

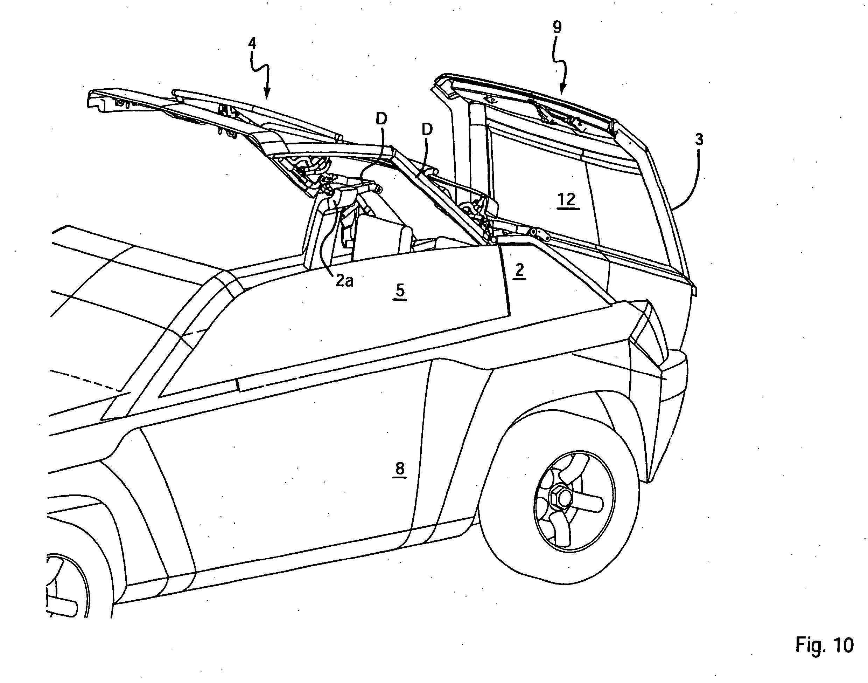

- Fig. 10: eine ähnliche Ansicht wie Fig. 9 bei beginnender Ablage des zu öffnenden Dachbereichs,

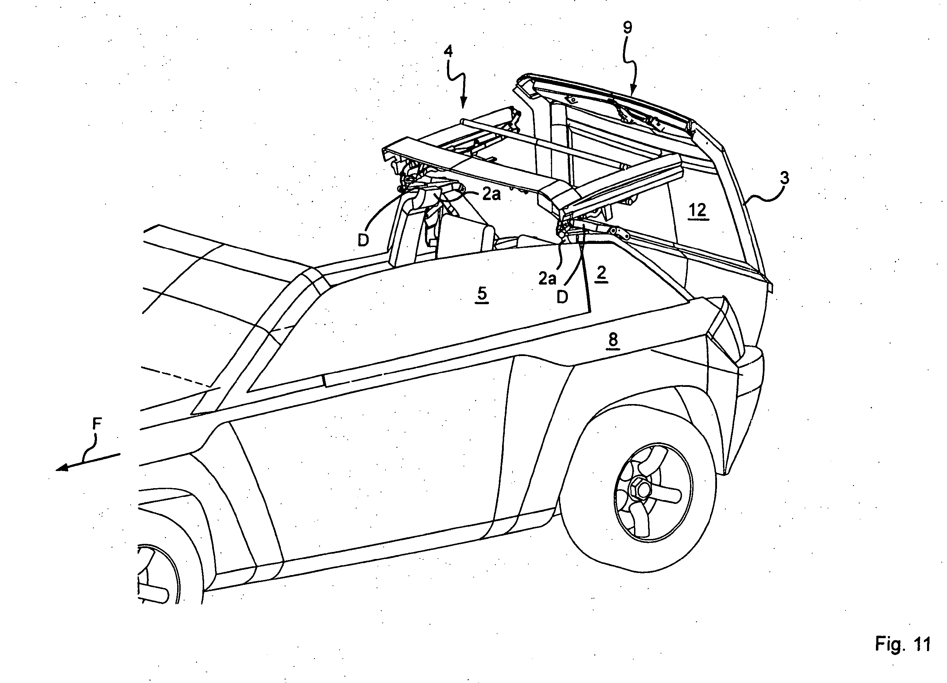

- Fig. 11: eine ähnliche Ansicht wie Fig. 10 bei weiter fortschreitender Ablage des zu öffnenden Dachbereichs,

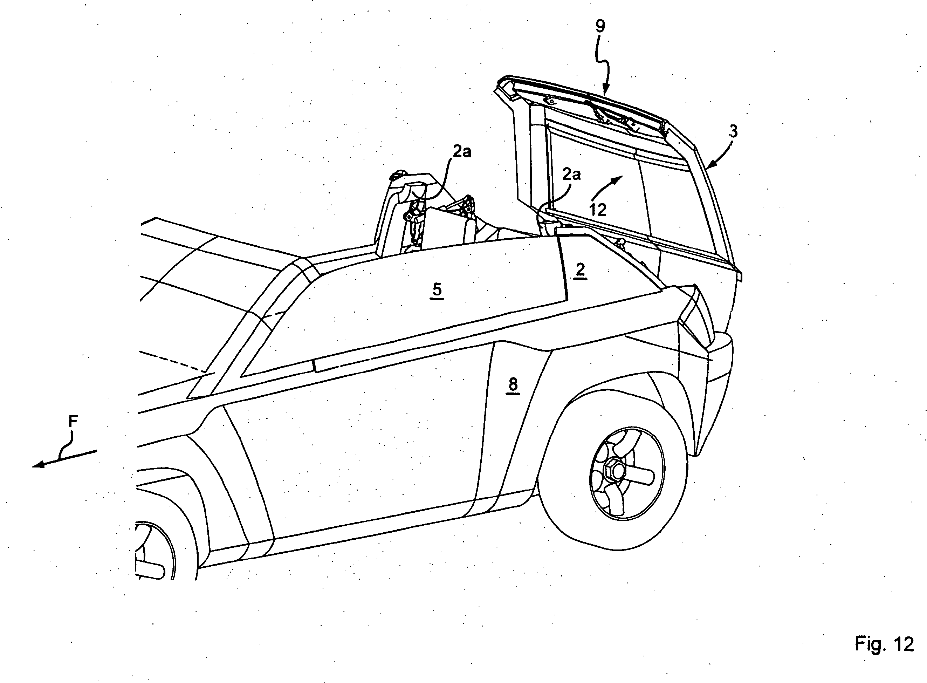

- Fig. 12: eine ähnliche Ansicht wie Fig. 11 bei abgelegtem Dachbereich,

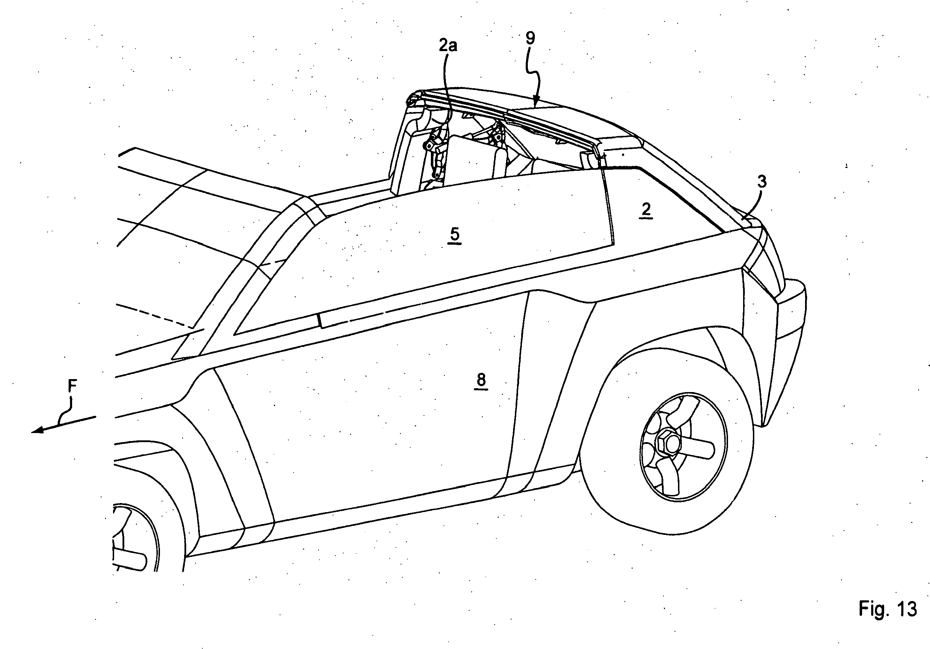

- Fig. 13: eine ähnliche Ansicht wie Fig. 12 bei über dem abgelegten Dachbereich wieder geschlossener Heckklappe.

Das hier beschriebene und in der Zeichnung dargestellte Kraftfahrzeug 1 umfaßt im hinteren Bereich aufragende karosseriefeste Säulen 2, sog. C-Säulen, an denen eine bewegliche Heckklappe 3 in ihrem geschlossenen Zustand anliegt. Der Heckklappe 3 ist in Fahrtrichtung F ist ein ein- oder mehrteiliger beweglicher Dachbereich 4 vorgeordnet, der hier bis zum Windschutzscheibenrahmen erstreckt ist und zu seiner Öffnung unter die Heckklappe 3 absenkbar ist. Abweichend hiervon, kann auch ein Voll-Cabriolet mit absenkbaren C-Säulen erfindungsgemäß ausgebildet sein.

Im Ausführungsbeispiel ist der Dachbereich 4 vor der Heckklappe 3 vollständig öffnungsfähig, auch seitliche Rahmenteile oberhalb von Seitenscheiben 5 sind entbehrlich, so daß sich im geöffneten Zustand auch hier ein gutes Freiluftgefühl ergibt. Der Heckbereich des Fahrzeugs kann dennoch auch in üblicher Art eines Kombi- oder Geländefahrzeugs ausgebildet sein. Ein starrer und daher preiswerter Überrollschutz kann zwischen den C-Säulen 2 und unterhalb des oberen Endes 9 der Heckklappe, beispielsweise als den Fahrzeuginnenraum quer überspannender Bügel, vorgesehen sein.

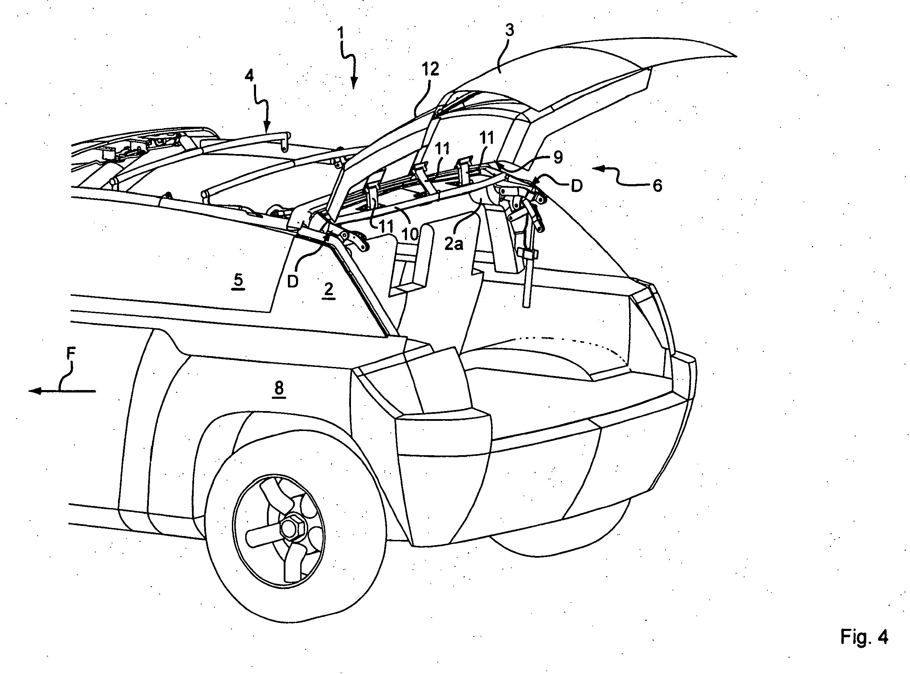

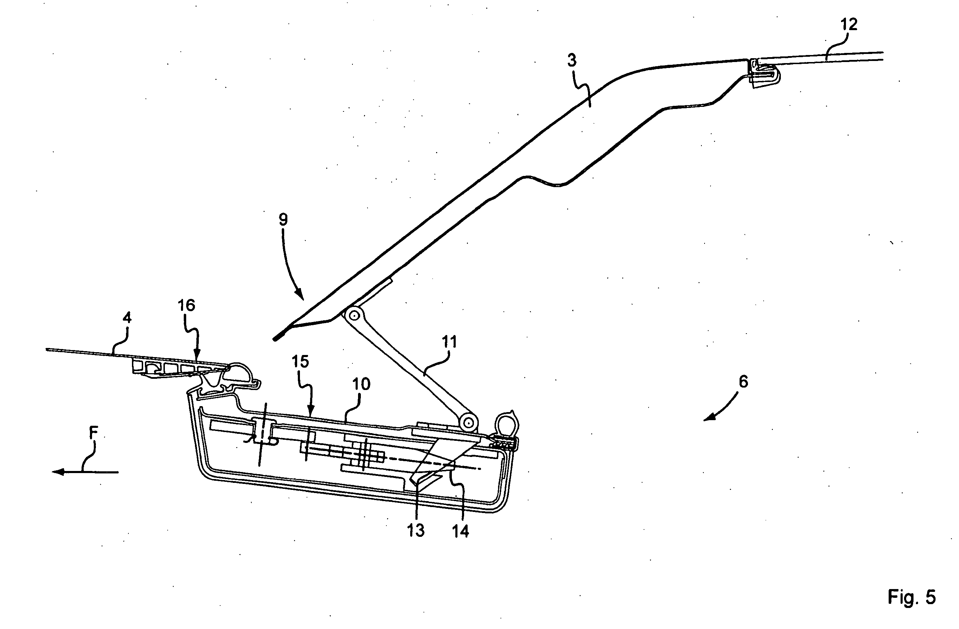

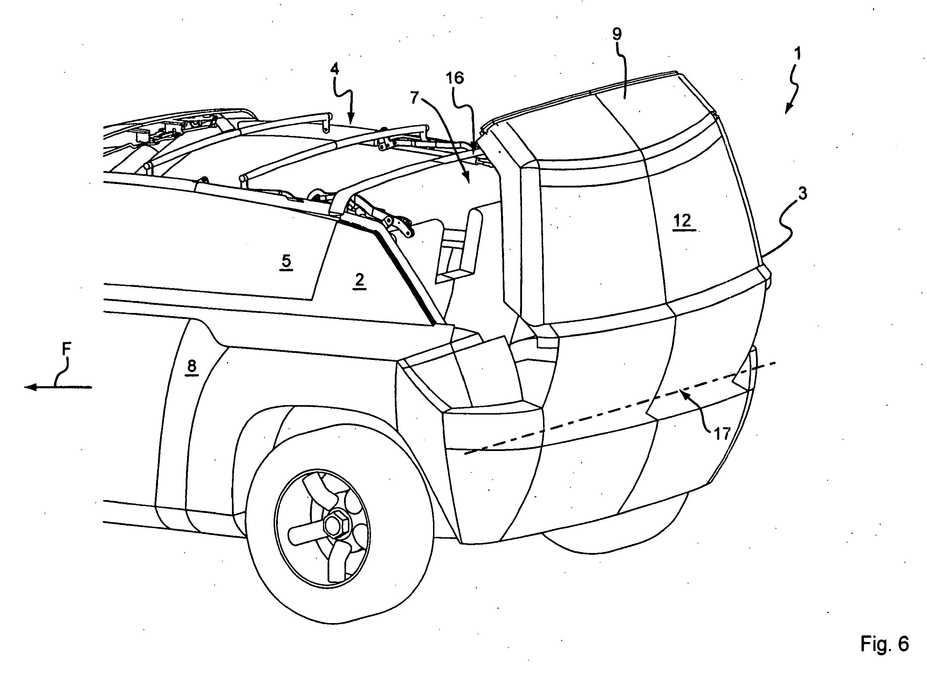

In jedem Fall ist die Heckklappe 3 in einem ersten Öffnungssinn zur Freigabe einer Beladeöffnung 6 für Gepäck (Fig. 4, Fig. 5) und in einem zweiten Öffnungssinn (Fig. 6) zur Freigabe einer Durchtrittsöffnung 7 für den Dachbereich 4 zu öffnen, der bei Ausbildung als Vollcabriolet-Fahrzeug das gesamte bewegliche Dach umfaßt. Hierzu ist die Heckklappe 3 je nach ihrer Geometrie in ihrem oberen und/oder vorderen Endbereich 9 mit einem Querträger 10 verbunden. Dieser ist während ihrer Öffnung zur Freigabe der Durchtrittsöffnung 7 für den Dachbereich 4 mit der Heckklappe 3 mitbeweglich und schwenkt mit dieser auf, so daß die Durchtrittsöffnung 7 vollständig freigegeben ist. Bei Öffnung der Heckklappe 3 zur Freigabe der Beladeöffnung 6 für Gepäck ist hingegen der Querträger 10 fest an der Karosserie 8 des Fahrzeugs 1 gehalten und bildet ein Widerlager für die Bewegung der Heckklappe 3 aus.

Die Heckklappe 3 ist hierfür über mehrere in Fahrzeugquerrichtung aufeinander folgende Gelenkanordnungen 11 an dem Querträger 10 beweglich gehalten. Diese sind hier gegeneinander versetzt und bilden somit in Seitenansicht ein Viergelenk aus. Die Heckklappe 3 wird dadurch bei ihrem Aufschwenken um die Gelenkanordnungen 11 zur Freigabe der Beladeöffnung 6 gleichzeitig mit ihrem oberen Randbereich 9 heckwärts verlagert.

Im Ausführungsbeispiel erstreckt sich die in sich ungeteilte Heckklappe 3 bis in den oberen Fahrzeugbereich und umfaßt ein Rückfenster 12. Der mit dem Querträger 5 verbundene Endbereich 9 der Heckklappe 3 ist dann ihr oberer Endbereich oberhalb des Rückfensters 12.

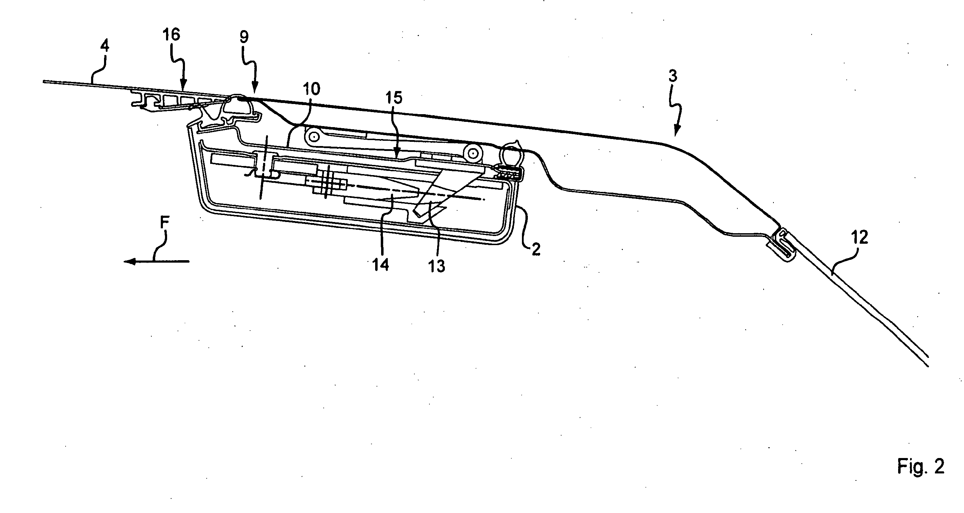

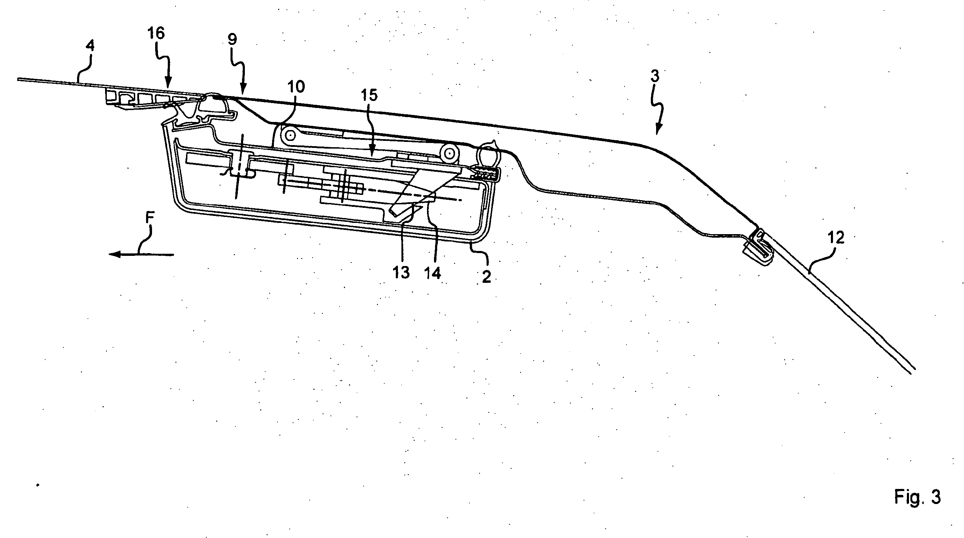

In geschlossener Stellung der Heckklappe 3 ist der Querträger 10 mit den oberen Enden der beiden seitlichen C-Säulen 2 verriegelbar, was beispielsweise über in Ösen 13 einschiebbare Bolzen 14 erreicht werden kann. Die C-Säulen 2 weisen zur Abstützung des Querträgers 10 innen aufragende und nach innen abgekröpfte Verstärkungen 2a auf. Das Dachgestänge D kann daher bei Bewegung des Dachbereichs 4 außen an den Abkröpfungen vorbeigeführt werden. In Fig. 3 ist die verriegelte Stellung des Querträgers 10 an den C-Säulen 2 dargestellt, in Fig. 2 hingegen die entriegelte. Eine Freigabe der Durchtrittsöffnung 7 für das Dach 2 ist nur bei gegenüber der Karosserie 8 entriegeltem und daher mit der Heckklappe 3 aufbeweglichem Querträger 10 möglich. Die Verriegelungen können fernbetätigbar sein, etwa dadurch, daß die Bolzen 14 im Verriegelungssinn federbelastet sind und zur Dachbereichsöffnung motorisch außer Eingriff gebracht werden können. Umgekehrt kann es auch möglich sein, daß die Verriegelung zwischen Querträger 10 und C-Säulen 2 durch übliches Drücken eines Betätigungsteils für ein Kofferraumschloß erreicht wird, so daß dann der Querträger 10 an den C-Säulen 2 unbewegt gehalten ist und die Heckklappe 3 gegenüber diesem über die Gelenkanordnungen 11 aufschwenken kann (Fig. 5).

Der Querträger 10 kann ein- oder mehrteilig ausgebildet sein. Eine einfache Herstellung ist ermöglicht, wenn er aus einem durchgehenden Profil gebildet ist. Der Querträger 10 umfaßt einen abgesenkten Mittelbereich, der zu den Fahrzeugquerseiten hin offen ist und als Wasserkanal 15 in an der Karosserie 8 verriegelter Stellung in die C-Säulen 2 und dort abwärts führende Ablaufkanäle überleitet. Die Gelenkanordnungen 11 können (Fig. 4) in dem Wasserkanal 15 angeordnet sein.

Auch kann der Querträger 10 in an den C-Säulen 2 verriegelter Stellung selbst Teil eines Überrollschutzes sein.

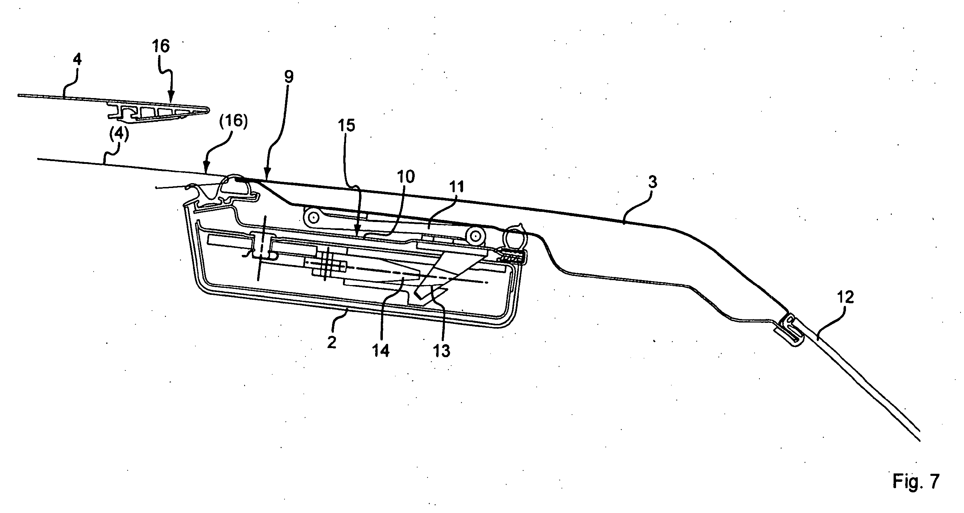

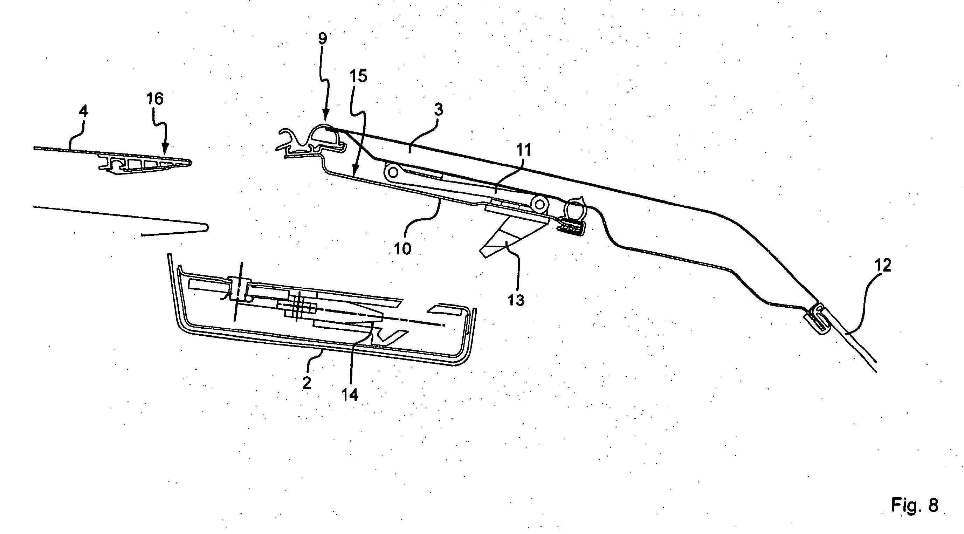

Wie in den Figuren 7 und 8 deutlich wird, liegt auch das rückwärtige Ende 16 des geschlossenen Dachbereichs 4 oberhalb des Wasserkanals 15, so daß dieser sowohl zur Entwässerung des Dachbereichs 4 als auch der Heckklappe 3 nutzbar ist. Der Wasserkanal 15 kann damit eine Doppelfunktion erfüllen. Um aus dieser Stellung heraus die Heckklappe 3 im Freigabesinn der Durchtrittsöffnung für den Dachbereich 4 um eine heckseitig unten gelegene Gelenkanordnung 17, zum Beispiel eine Schwenkachse, heckwärts aufschwenken zu können, muß zunächst das rückwärtige Ende 16 des Dachbereichs 4 zumindest ein Stück weit angehoben werden (Fig. 7). Anschließend kann der Querträger 10 mit der Heckklappe 3 angehoben und gleichzeitig nach hinten verlagert werden (Fig. 8).

Das Öffnen der Heckklappe 3 kann in einem oder beiden Öffnungssinnen mit Hilfe von Antriebs- oder antriebsunterstützenden Organen erfolgen.

## Patentansprüche

1. Kraftfahrzeug (1) mit einem zumindest im wesentlichen im rückwärtigen Fahrzeugbereich unterhalb einer Heckklappe (3) ablegbaren Dachbereich (4), wobei die Heckklappe (3) wahlweise zur Freigabe einer Beladeöffnung (6) für Gepäck oder zur Freigabe einer Durchtrittsöffnung (7) für den Dachbereich (4) geöffnet werden kann und wobei für letztgenannte Öffnung eine erste Gelenkanordnung (17) im Bereich einer heckseitigen Abschlußkante der Heckklappe (3) vorgesehen ist,
**dadurch gekennzeichnet,**
**daß** die Heckklappe (3) in ihrem oberen und/oder vorderen Endbereich (9) mit einem Querträger (10) verbunden ist, der bei ihrer Öffnung zur Freigabe der Durchtrittsöffnung (7) für den Dachbereich (4) mitbeweglich und der bei deren Öffnung zur Freigabe der Beladeöffnung (6) für Gepäck als Widerlager für die Heckklappe (3) an der Karosserie (8) halterbar ist.

2. Kraftfahrzeug nach Anspruch 1,
**dadurch gekennzeichnet,**
**daß** die Heckklappe (3) ein Rückfenster (12) umfaßt und der Querträger (10) oberhalb des Rückfensters (12) gelegen ist.

3. Kraftfahrzeug nach Anspruch 2,
**dadurch gekennzeichnet,**
**daß** der Querträger (10) mit festen C-Säulen (2) der Karosserie (8) verriegelbar ist.

4. Kraftfahrzeug nach Anspruch 3,
**dadurch gekennzeichnet,**
**daß** das Dach außerhalb der festen C-Säulen (2) im wesentlichen durch einen vollständig öffnungsfähigen Dachbereich (4) ausgebildet ist.

5. Kraftfahrzeug nach einem der Ansprüche 1 bis 4, **dadurch gekennzeichnet,**
**daß** der Querträger (10) bei Freigabe der Beladeöffnung (6) für Gepäck gegenüber der Karosserie (8) und bei Freigabe der Durchtrittsöffnung (7) für den Dachbereich (4) gegenüber der Heckklappe (3) unbewegt ist

6. Kraftfahrzeug nach einem der Ansprüche 1 bis 5, **dadurch gekennzeichnet,**
**daß** der Querträger (10) mit mehreren in Fahrzeugquerrichtung aufeinander folgenden Gelenkanordnungen (11) für die Heckklappe (3) versehen ist.

7. Kraftfahrzeug nach einem der Ansprüche 1 bis 6, **dadurch gekennzeichnet,**
**daß** der Querträger (10) einen zu den Seiten offenen Wasserkanal (15) umfaßt, der in an der Karosserie (8) verriegelter Stellung in Ablaufkanäle der C-Säulen (2) überleitet.

8. Kraftfahrzeug nach einem der Ansprüche 1 bis 7, **dadurch gekennzeichnet,**
**daß** der Querträger (10) ein durchgehendes Profil mit einem abgesenkten Mittelbereich umfaßt, wobei in dem Mittelbereich die Gelenkanordnungen (11) für die Heckklappe (3) angeordnet sind.

9. Kraftfahrzeug nach einem der Ansprüche 1 bis 8, **dadurch gekennzeichnet,**
**daß** der Dachbereich (4) im geschlossenen Zustand den Querträger (10) bereichsweise übergreift und im bezüglich der Fahrtrichtung (F) hinteren Bereich (16) zur Öffnung der Heckklappe (3) zur Fre-igabe der Durchtrittsöffnung (7) für den Dachbereich (4) anhebbar ist.

## Claims

1. A motor vehicle (1) with a roof portion (4) which can be stowed at least substantially in the rear of the vehicle below a tailgate (3), which tailgate (3) can be opened selectively to expose a loading opening (6) for luggage or to expose a passage opening (7) for the roof portion (4), a first joint assembly (17) for the latter opening being arranged in the area of a rear end edge of the tailgate (3),
**characterised in that** the tailgate (3) is connected to a cross-member (10) in its upper and/or front end region (9), which cross-member (10) can be moved jointly with the tailgate (3) when opening the latter to expose the passage opening (7) for the roof portion (4) and which can be held as an abutment for the tailgate (3) on the vehicle body (8) when opening the tailgate (3) to expose the loading opening (6) for luggage.

2. The motor vehicle according to claim 1, **characterised in that** the tailgate (3) comprises a rear window (12) and the cross-member (10) is located above the rear window (12).

3. The motor vehicle according to claim 2, **characterised in that** the cross-member (10) can be latched to fixed C pillars (2) of the vehicle body (8).

4. The motor vehicle according to claim 3, **characterised in that** the roof outside the fixed C pillars (2) is substantially formed by a fully openable roof portion (4).

5. The motor vehicle according to any one of claims 1 to 4, **characterised in that** the cross-member (10) is immobile with respect to the vehicle body (8) when exposing the loading opening (6) for luggage and is immobile with respect to the tailgate (3) when exposing the passage opening (7) for the roof portion (4).

6. The motor vehicle according to any one of claims 1 to 5, **characterised in that** the cross-member (10) is provided with a plurality of joint assemblies (11) for the tailgate (3) which are arranged consecutively in the transverse vehicle direction.

7. The motor vehicle according to any one of claims 1 to 6, **characterised in that** the cross-member (10) comprises a water channel (15), which is open to the sides and leads into drainage channels of the C pillars (2) in the position latched to the vehicle body (8).

8. The motor vehicle according to any one of claims 1 to 7, **characterised in that** the cross-member (10) comprises a continuous profile with a lowered central portion, in which central portion the joint assemblies (11) for the tailgate (3) are arranged.

9. The motor vehicle according to any one of claims 1 to 8, **characterised in that** the roof portion (4), in its closed position, covers parts of the cross-member (10), and can be lifted to open the tailgate (3) and to expose the passage opening (7) for the roof portion (4) at its rear portion (16), viewed in the direction of travel (F).

## Revendications

1. Véhicule automobile (1), comprenant une partie de toit (4) que l'on peut ranger au moins sensiblement à l'arrière du véhicule, au-dessous d'un hayon (3), ledit hayon (3) pouvant être ouvert sélectivement ou bien pour exposer une ouverture de chargement (6) de bagages ou bien pour exposer une ouverture de passage (7) pour la partie de toit (4), et un premier ensemble d'articulation (17) pour cette dernière ouverture étant disposé dans la région d'un rebord arrière du hayon (3),
**caractérisé en ce que** la région d'extrémité (9) supérieure et/ou avant du hayon (3) est reliée à une traverse (10) qui peut être déplacée ensemble avec ledit hayon (3) lors de l'ouverture de ce dernier pour exposer l'ouverture de passage (7) pour la partie de toit (4) et qui peut être tenue sur la carrosserie (8) comme une butée pour l'hayon (3) lors de l'ouverture de ce dernier pour exposer l'ouverture de chargement (6) de bagages.

2. Véhicule automobile selon la revendication 1, **caractérisé en ce que** l'hayon (3) comprend une lunette arrière (12) et la traverse (10) est située au-dessus de ladite lunette arrière (12).

3. Véhicule automobile selon la revendication 2, **caractérisé en ce que** la traverse (10) peut être verrouillée sur des montants C fixes (2) de la carrosserie (8).

4. Véhicule automobile selon la revendication 3, **caractérisé en ce que** le toit hors des montants C fixes (2) est sensiblement constitué par une partie de toit (4) complètement ouvrable.

5. Véhicule automobile selon l'une quelconque des revendications 1 à 4, **caractérisé en ce que** la traverse (10) est immobile par rapport à la carrosserie (8) lorsque l'ouverture de chargement (6) de bagages est exposée et est immobile par rapport à l'hayon (3) lorsque l'ouverture de passage (7) pour la partie de toit (4) est exposée.

6. Véhicule automobile selon l'une quelconque des revendications 1 à 5, **caractérisé en ce que** la traverse (10) présente plusieurs ensembles d'articulation (11) pour l'hayon (3) qui sont disposés les uns derrière les autres dans la direction transversale du véhicule.

7. Véhicule automobile selon l'une quelconque des revendications 1 à 6, **caractérisé en ce que** la traverse (10) comprend un canal d'eau (15), qui est latéralement ouvert et qui, en position de verrouillage sur la carrosserie (8), amène dans des canaux d'évacuation des montants C (2).

8. Véhicule automobile selon l'une quelconque des revendications 1 à 7, **caractérisé en ce que** la traverse (10) présente un profil continu avec une partie centrale abaissée dans laquelle sont disposés les ensembles d'articulation (11) pour l'hayon (3).

9. Véhicule automobile selon l'une quelconque des revendications 1 à 8, **caractérisé en ce que** la partie de toit (4) fermée recouvre des sections de la traverse (10), et sa région arrière (16), vue en direction de marche (F), peut être levée pour ouvrir l'hayon (3) et exposer l'ouverture de passage (7) pour la partie de toit (4).
